# EUROPEAN PATENT APPLICATION

(11) **EP 4 108 088 A1**
(43) Date of publication of application: **28.12.2022**
(21) Application number: 21181691.3
(22) Date of filing: 25.06.2021
(51) Int. Cl.: A22C 9/00, G01D 5/20

(54) **SENSOR ARRANGEMENT IN A FOOD PROCESSING MACHINE**

(71) Applicant: Günther Maschinenbau GmbH, 64807 Dieburg (DE)
(72) Inventor: Jäckel, Andreas, 64850 Schaafheim - Schlierbach (DE); Schwebel, Jörg, 64405 Fischbachtal - Niedernhausen (DE)
(74) Representative: Eisenführ Speiser

(57) **Abstract**

The present invention relates to a sensor arrangement (300) for a food processing machine (I) having at least processing tool (120) reversibly performing a working movement, the sensor arrangement (300) being provided for monitoring the at least one processing tool (120). The sensor arrangement (300) includes at least one evaluation unit (310) and at least one sensor unit (320). The sensor assembly (300) is adapted to be connected to at least one further sensor unit (320) such that the at least one evaluation unit (310) and the at least two sensor units (320) are arranged in series. The present invention further relates to a food processing machine (I) which comprises at least one processing tool (120) reversibly performing a working movement, a hold-down device (200) for holding down a food product to be processed, and at least one sensor arrangement (300) which is associated with the hold-down device (200) as well as to a hold-down device (200) for holding down a food product to be processed in a food processing machine (I), which includes at least one sensor arrangement (300) which is associated with the hold-down device (200).

## Description

The present invention relates to a sensor arrangement, particularly a sensor arrangement for a food processing machine having at least one processing tool reversibly performing a working movement, the sensor arrangement being provided for monitoring the at least one processing tool. The present invention further relates to a food processing machine comprising at least one processing tool reversibly performing a working movement, a hold-down device for holding down a food product to be processed, and at least one sensor arrangement. Moreover, the present invention relates to a hold-down device for holding down a food product to be processed in a food processing machine, which includes at least one sensor arrangement.

In practice, for processing food products, like pieces of meat, fish, poultry or dairy products, food processing machines are known, which include one or more reversibly movable or reciprocating processing tools. One example of such a food processing machine is an injector apparatus that includes a large number of hollow needles attached to an injector head. The injector head can reversibly be moved or reciprocated towards the food product to be processed in such a way that the needles can penetrate the food product in order to deliver an injectate into the food product. It is further known that sensors may be provided in such food processing machines, for monitoring process parameters, like the injection pressure, or the processing tools. Another example for a food processing machine is a steaker, in which the processing tools are knives which are reversibly moved towards a piece of meat.

A food processing machine, as known from EP patent application 2 225 946, is a steaker that includes tool carriers with a number of knives as the processing tools attached thereto. The tool carriers together with said knives are reversibly vertically movable towards the food products to be treated, like a piece of meat positioned below said tool carriers, by a respective drive, for cutting the surface of said product.

In EP patent application 0 879 561, a pickle injector is disclosed, for injecting a liquid substance into meat. The injector comprises a high-pressure liquid generator and a pressure controller for controlling the injection pressure during the injection process.

From DE patent 10 2015 113 377, an injector apparatus for injecting brine into meat is known, which has an injector head with a plurality of injection needles. Each of said injection needles is provided with a sensor for detecting clogged or defective needles.

In the known injector apparatuses, a large number of processing tools, like injection needles or steaker knives, may be arranged, for evenly processing the food product. Accordingly, a huge number of sensors has to be provided for monitoring each of the processing tools. This huge number of sensors require installation space, a respective control unit of complex configuration and huge control effort.

Thus, it is an object the present invention to provide a sensor arrangement, a food processing machine including the inventive sensor arrangement and a hold-down device, by means of which the above mentioned drawbacks may be overcome, and which allow a safe control of the food processing machine with decreased construction and control effort.

According to the present invention, there is provided a sensor arrangement for a food processing machine having at least one processing tool reversibly performing a working movement, the sensor arrangement being provided for monitoring the at least one processing tool. The sensor arrangement includes at least one evaluation unit and at least one sensor unit, wherein the sensor arrangement is adapted to be connected to at least one further sensor unit such that the at least one evaluation unit and the at least two sensor units are arranged in series. The inventive sensor arrangement may thereby be equipped with two or more sensors connected to a common evaluation unit, whereby the installation space and complexity of the sensor arrangement may be reduced.

If the processing machine has several processing tools, a sensor unit can be provided for each processing tool. It is also possible for only a certain number of processing tools to be monitored by one sensor unit in each case, which also includes the case where only a single processing tool out of several processing tools is monitored.

For further reducing the complexity of the sensor arrangement, the at least one evaluation unit and the at least two sensor units are interconnected by preferably severable cables, preferably in form of a ribbon cable. In principle, the evaluation unit and the two sensor units can only be connected by the severable cables or the ribbon cable when they are mounted in a processing machine. It is more advantageous if the evaluation unit and the two sensor units, as well as other sensor units if necessary, can be installed in the processing machine already pre-assembled.

In an alternative embodiment, the at least one evaluation unit and the at least two sensor units are coupled to each other by connector means, like plug connectors or electrical clamps. This configuration allows to use a pre-fabricated or pre-assembled sensor device including a predefined number of sensor units connected to a common evaluation unit, and to easily adapt the number of sensor units, to the number of processing tools to be monitored by adding additional sensor units to the pre-assembled entity consisting of the predefined number of sensor units and the evaluation unit.

The inventive sensor arrangement may have different designs. The at least two sensor units may be arranged on the same side of the at least one evaluation unit, or on opposite sides of the at least one evaluation unit. Thereby, the sensor arrangement may be adapted to specific designs of the respective food processing machine.

The sensor arrangement may be provided with various kinds of sensor units or sensor elements, like at least one of an optical, inductive or capacitive sensor. The sensor arrangement may include sensors of the same kind or of different kinds, dependent on the kind of incident to be monitored.

In an advantageous embodiment of the inventive sensor arrangement, each sensor unit includes an inductive sensor with at least one induction coil, preferably in form of a conductor loop. In this configuration, the at least one conductor loop may have a bulged portion for providing a contact region.

In a further advantageous embodiment of the sensor arrangement, each sensor unit comprises a recess, preferably a hole along which the at least one processing tool to be monitored moves during its working movement. Thereby, the sensor unit, and particularly, the sensor element, is arranged in close vicinity to said processing tool and may securely monitor the tool during its working movement.

According to a preferred design, the induction coil is arranged around the recess. Thereby, the induction coil surrounds the processing tool, and enables a secure monitoring of its working movement.

The recess in the sensor unit, through which the processing tool extends, may have any suitable shape, like a circular, triangular or rectangular shape. However, advantageously, the shape of the recess is adapted to the shape of the processing tool, particularly, its cross-sectional shape. In accordance therewith, the induction coil has a corresponding shape.

Advantageously, each sensor unit includes an A/D converter. The A/D converter may digitalize each signal generated by the sensor unit before being transmitted to the evaluation unit. Thus, possible influences to the sensor signal during transmission, which may result in a faulty signal, may be omitted.

In a preferred embodiment of the inventive sensor arrangement, the at least one evaluation unit and each sensor unit are arranged on a carrier unit, whereby the handling of the sensor arrangement and its installation are simplified.

The carrier unit may be realized in different ways. In one embodiment, the carrier unit is formed by a printed circuit board. In this case, the components of the sensor units and the evaluation unit may directly be mounted on the circuit board.

Alternatively, the carrier unit may be formed at least partially by a ribbon cable. The sensor arrangement then has a more flexible structure and the installation may be easier.

Further according to the present invention, there is provided a food processing machine comprising at least one processing tool reversibly performing a working movement, a hold-down device for holding down a food product to be processed, and at least one sensor arrangement as described above. In the food processing machine, the at least one sensor arrangement is associated with the hold-down device. Thereby, the processing tool, while executing its working movement, moves relative to the food product and relative to the sensor units of the sensor arrangement. Accordingly, the movement of the processing tool may securely be monitored by the sensor arrangement.

The working movement can be a reciprocating motion performed in a horizontal plane, a vertical plane or a plane between the horizontal and vertical planes and can be a linear motion, a rotary motion or a combination thereof.

The processing machine may preferably be an injector apparatus for injecting injectate or brine into food, such as, for example, meat, fish, cheese or dairy products, which has an injector head having a processing tool carrier in form of a needle bridge with multiple hollow needles. The injector head moves linearly back and forth in a vertical plane so that the needles can penetrate the food to be processed, and injectate or brine can be introduced into the food via the hollow interior of the needles. For the guidance of the needles and for the fixation of the food to be processed, the hold-down device is provided which can also be reversibly moved in a vertical plane. Here, the sensor arrangement can be provided, for example, to detect a breakage of a needle so that parts of the broken needle cannot penetrate the food to be processed or that the processed food can be removed from the further processing process in order to avoid that this food probably including parts of the broken needle is further processed.

It has to be understood that the at least one sensor arrangement may be connected to a control unit of the food processing machine. Said control unit may receive the signals from the at least one sensor arrangement, may enable input of settings or control commands, and may output information to an operator, like handling instructions or an error message. The control unit may also include evaluation means for evaluating the signals received from the at least one sensor arrangement, particularly in view of possible malfunction or defects of the processing tools monitored by the at least one sensor unit.

It has to further be understood that more than one sensor arrangement may be associated with the processing machine, in particular with the hold-down device, in order to adapt the food processing machine to the size of the products to be processed.

Alternatively, the hold-down device of the food processing machine may be equipped with a number of sensor arrangements according to the total number of processing tools currently installed in the food processing machine. The sensor arrangements may be arranged side by side at the hold-down device or inside, and may then be interconnected such that all sensors may monitor the movement of the processing tools. This allows a matrix-like arrangement of the sensor units of the sensor arrangements.

Alternatively, predefined groups of sensor units may be selected for monitoring the respective processing tools, e.g. every second or third sensor unit in a row and/or a column. Thereby, the sensor units actually monitoring the processing tools may form predefined sensor patterns.

The present invention also relates to a hold-down device for holding down a food product to be processed in a food processing machine, including at least one sensor arrangement as described above, which is associated with the hold-down device. The inventive hold-down device may be provided as a spare part or retrofit part for existing food processing machines.

The processing tools or a defined number thereof are usually arranged on a common carrier element in a predefined pattern, like in rows or columns, thereby forming a tool bridge. The food processing machine may be equipped with one or more of said tool bridges. For adapting the food processing machine to the product to be processed, the one or more tool bridges and/or the hold-down device may be exchanged by respective other tool bridges carrying a different number of processing tools, or a different hold-down device including a different number of sensor arrangements.

In order to avoid a mismatch between the processing tools, the hold-down device and/or the product to be processed, the tool bridges and the hold-down devices may be provided with an identification, like a label including information, like the kind, number and size of the processing tool, the size and kind of the sensor arrangements and/or information regarding the compatibility of the processing tools, the one or more hold-down devices and/or the food processing machine with each other. Prior or after installing the machine elements mentioned above on the food processing machine, this information may be read out by respective readers which may be connected to the control unit of said food processing machine. The control unit may then compare this information with information stored in the control unit, e.g. regarding whether the correct elements are installed, or regarding the subsequent treatment process.

The identification may be a label that includes a barcode or an RFID chip. These kinds of labels may automatically be read out and, particularly when using RFID technology, additional information may be stored in said labels. This additional information may include data regarding the operating time or maintenance history.

Additionally thereto, the information stored in the identification may also be used for controlling the food processing machine, like preventing the start of the treatment process in the case that the currently installed processing tool is not the correct tool for the intended process, that its maximum operating time is exceeded, or that a required maintenance has not been executed.

In the following, further advantages and embodiments of the inventive devices are described in conjunction with the attached drawings. Thereby, the expressions "left", "right", "below" and "above" are referred to the drawings in an orientation of the drawings, which allows the normal reading of the reference numbers.

In the drawings:
- Fig. 1:: is a perspective view to an injector apparatus as a food processing machine according to the present invention;
- Fig. 2:: is a perspective view to the processing tools and a hold-down device of the food processing machine of Fig. 1;
- Fig. 3:: is an embodiment of a sensor arrangement according to the present invention;
- Fig. 4:: is a cross-sectional view of the hold-down device of Fig. 2 in a vertical plane; and
- Fig. 5:: is a view to the interior of the hold-down device of the food processing machine of Fig. 1.

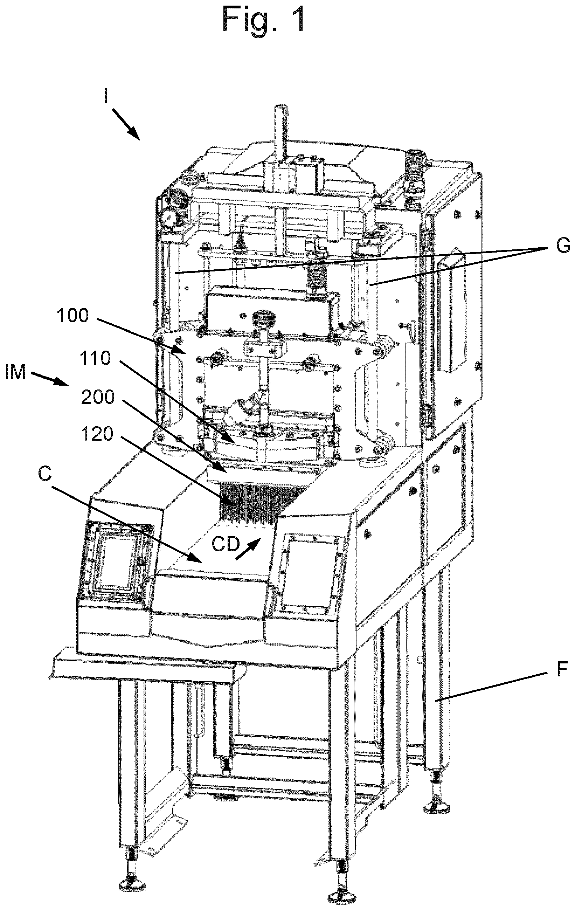

Fig. 1 shows an injector apparatus I as an example for a food processing machine. Injector apparatus I includes as its main components a framework F, a horizontally arranged conveyor device C for conveying a food product to be processed in injector apparatus I wherein the product is conveyed in conveying direction CD, and an injector module IM as a processing module, arranged above conveyor device C, both carried by framework F.

Injector module IM comprises an injector head 100 which is reversibly vertically movable towards conveyor device C along vertically arranged guide means G by a respective drive, like an electric motor (not visible in Fig. 1). Injector head 100 includes a processing tool carrier in the form of a needle bridge 110 with a number of hollow injector needles 120 forming the processing tools. Injector needles 120 extend downwardly from needle bridge 110. Together with injector head 100, needle bridge 110 with injector needless 120 is reversibly vertically movable towards conveyor device C, for processing food products conveyed through injector apparatus I by conveyor device C, like pieces of meat, by piercing and injecting a predefined amount of injectate or brine into said food products while being positioned below injector head 100.

Injector module IM further comprises a hold-down device 200 arranged immediately below needle bridge 110 such that injector needles 120 extend therethrough. Hold-down device 200 is reversibly vertically movable towards conveyor device C and relative to needle bridge 110, for holding down a food product to be processed on conveyor device C during the injection operation, and for releasing the food product after being processed.

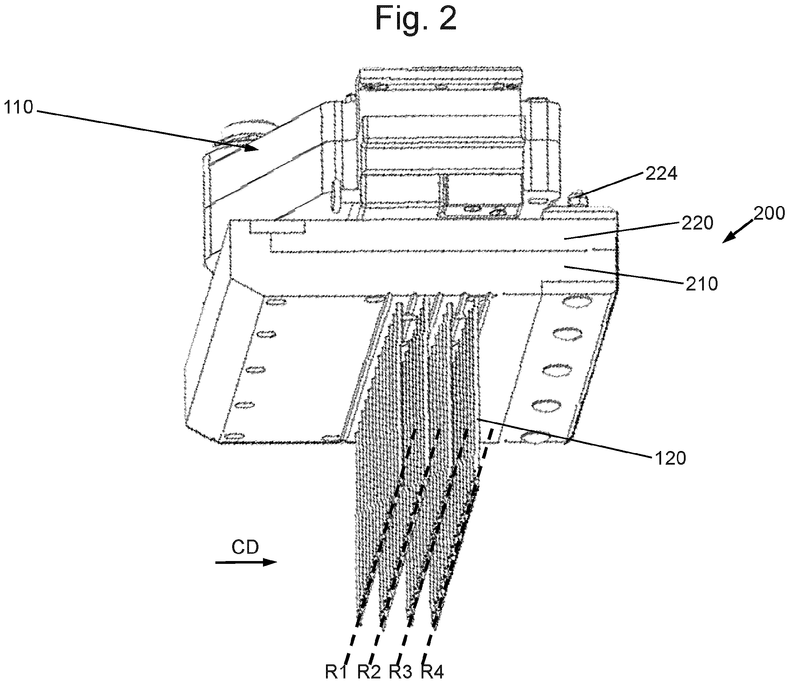

Fig. 2 is a perspective view to needle bridge 110 and hold-down device 200 of injector module IM, with hold-down device 200 in close vicinity to needle bridge 110. That means that injector needles 120 are in their lowermost position relative to hold-down device 200.

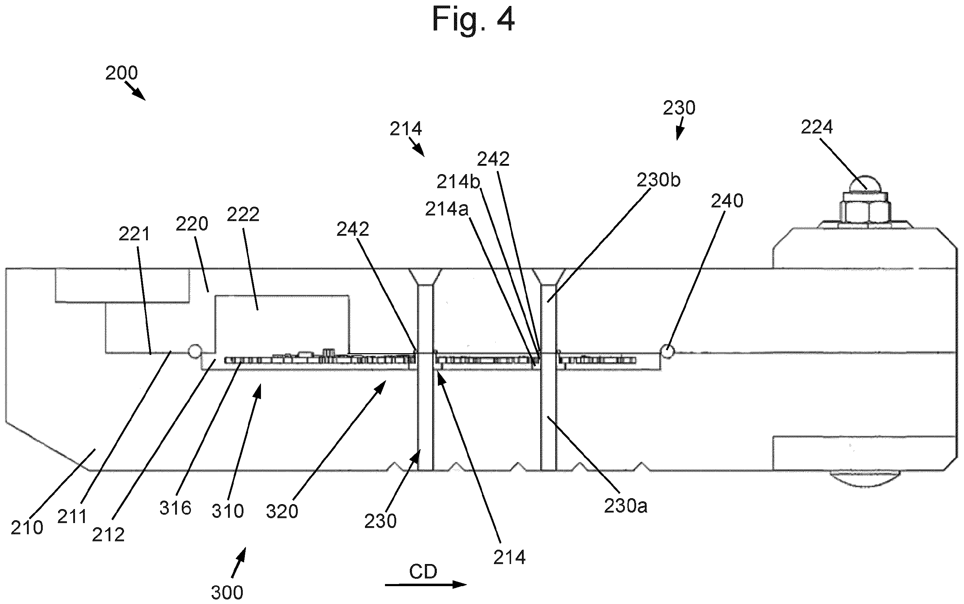

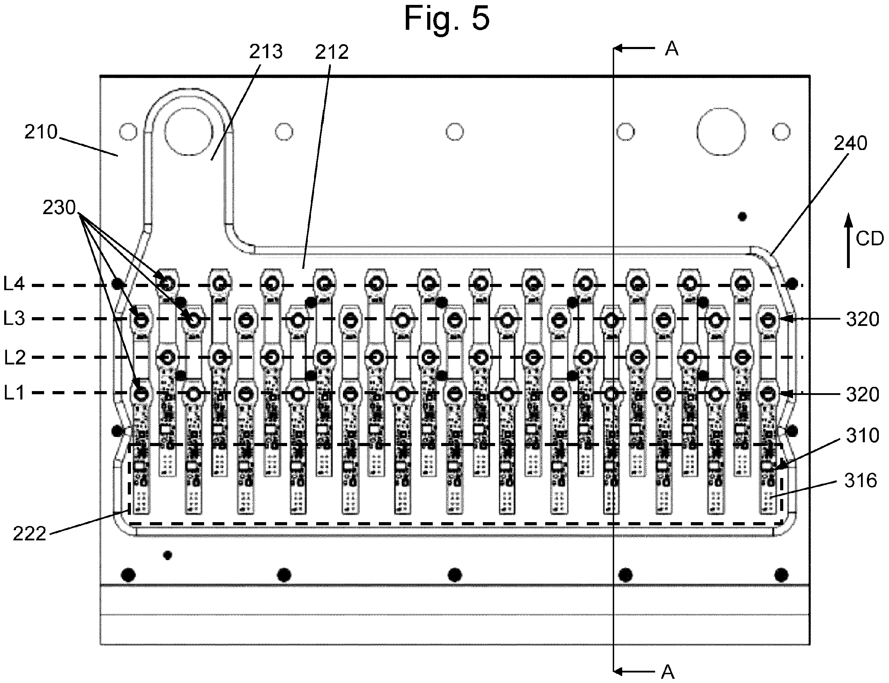

For enabling injector needles 120 to pass through hold-down device 200 vertically extending throughholes 230 (cf. Figs. 4, 5) are provided in hold-down device 200. Throughholes 230 are arranged such that injector needles 120 of needle bridge 110 may pass therethrough when needle bridge 110 is vertically moved relative to hold-down device 200, as will be explained in detail in conjunction with Fig. 4.

In the embodiment according to Fig. 2, injector needles 120 of needle bridge 110 are arranged in four rows R1, R2, R3, R4 oriented parallel to each other and extending crosswise to conveying direction CD.

As further can be seen in Fig. 2, hold-down device 200 has a generally cuboid shape and includes a lower part 210 and an upper part 220 arranged at least approximately congruently above each other and connected to each other by respective connecting elements including screws 224.

At least one sensor arrangement 300 is positioned in hold-down device 200 for monitoring injector needles 120 of needle bridge 110 while being reversibly vertically moved through hold-down device 200, at least during an injection process. Sensor arrangement 300 is disposed between lower portion 210 and upper portion 220 of hold-down device 200.

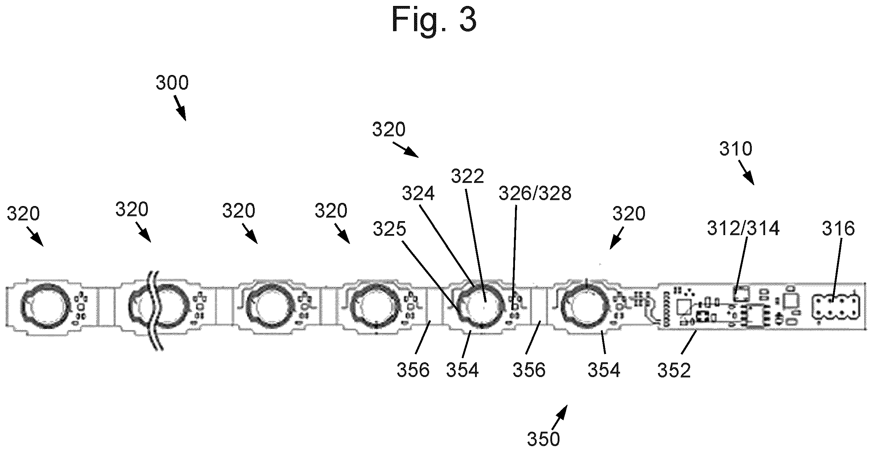

Fig. 3 shows an embodiment of sensor arrangement 300 according to the present invention.

Sensor arrangement 300 has a generally flat, longitudinally extending shape and comprises an evaluation unit 310 and several sensor units 320. Sensor units 320 are of substantially identical design.

Evaluation unit 310 and sensor units 320 are arranged on a carrier unit 350. Carrier unit 350 includes one carrier element 352 on which evaluation unit 310 is arranged, and carrier elements 354 on which sensor units 320 are arranged. Carrier elements 352, 354 are connected by respective connection portions formed by flat ribbon cable sections 356, such that evaluation unit 310 and sensor units 320 are arranged in series.

Each sensor unit 320 is provided with an at least approximately circular recess 322 that extends through carrier element 354 and forms thus a throughhole through carrier element 354. An inductive sensor 324 in the form of an induction coil is arranged on carrier element 354 such that it surrounds recess 322 wherein the one or several wires of induction coil follow at least partially and at least approximately the contour of recess 322. Inductive sensor or induction coil 324 includes a bulged portion 325 extending in longitudinal direction of sensor arrangement 300 and away from recess 322, thereby forming a connection sector for induction coil 320 between recess 322 and induction coil 324.

Sensor unit 320 is further provided with an evaluation circuitry 326 and an A/D-converter 328 for converting analog signals generated by induction coil 324 into digital signals.

Evaluation unit 310 includes an evaluation circuitry 312 for further evaluating signals received from sensor units 320 and a controller circuitry 314 for forwarding said signals to the control unit of injector apparatus I. However, it is not necessary that sensor units 320 and/or evaluation unit 310 are equipped with evaluation circuitry, particularly in the case that evaluation and analysis of the signals forwarded to the control unit of injector apparatus I is provided with evaluation means for evaluating and analysing the signals received from evaluation unit 310 of sensor arrangement 300.

Carrier elements 352, 354 are realized by printed circuit boards onto which the components of evaluation unit 310 and sensor units 320 are mounted and electrically coupled. Evaluation unit 310 and sensor units 320 are electrically coupled by flat ribbon cable sections 356. Evaluation unit 310 is further equipped with a connection portion 316 for connecting sensor arrangement 300 with the control unit of injector apparatus I.

As can be seen in Fig. 3, in this specific embodiment of sensor arrangement 300, evaluation unit 310 and the rightmost sensor unit 320 are arranged on a common carrier element, whereas neighbouring sensor units 320 are connected to each other by flat ribbon cable sections 356. In principle, it is also possible for several sensor units 320 to be arranged on a common carrier element and for several other sensor units 320 to be connected to each other and to the common carrier element via flat ribbon cable sections 356.

Fig. 4 is a cross-sectional view of hold-down device 200 in a plane arranged vertically and aligned in conveying direction CD, along line A-A (cf. Fig. 5).

As can be inferred from Fig. 4, lower part 210 of hold-down device 200 has an upper surface 211, and upper part 220 of hold-down device 200 has a lower surface 221 which are in contact with each other. A cavity 212 extends downwardly from upper surface 211 into lower part 210. In cavity 212, at least one sensor arrangement 300 is positioned. Sensor arrangement 300, at least approximately, extends from the right end on cavity 212 towards its left end, as can be seen in Fig. 4. A cavity 222 extends from lower surface 221 into upper part 220. Cavity 222 is arranged above the leftmost portion of cavity 212, such that a portion on the left end of sensor arrangement 300 is covered by cavity 222.

Between upper surface 211 of lower part 210 and lower surface 221 of upper part 220 of hold-down device 200, a first sealing element in the form of a sealing ring 240 is arranged, which surrounds cavity 212 (cf. Fig. 4), such that cavities 212, 222 are fluid-tightly sealed against the atmosphere surrounding hold-down device 200.

As further can be seen in Fig. 4, each throughhole 230 extending through hold-down device 200 has a first portion 230a arranged in lower part 210 and a second portion 230b arranged in upper part 220, with first and second portions 230a, 230b being coaxially aligned with respect to each other and also coaxially aligned with recesses 322. Hollow needles 120 pass through these throughholes 230, 332 during lowering and raising of the needle bridge 110.

At the upper end of first portion 230a of throughhole 230, a stepped ring-shaped protrusion 214 extends into cavity 212, including a first portion 214a and a second portion 214b in this order. The diameter of first portion 214a is larger than the diameter of second portion 214b.

The diameter of second portion 214b is slightly smaller than the diameter of recess 322 in carrier element 354 of sensor unit 320, whereas the diameter of first portion 214a of protrusion 214 is larger than the diameter of recess 322.

A sensor arrangement 300, as shown in Fig. 4, includes an evaluation unit 310 and two sensor units 320. Sensor arrangement 300 is positioned in cavity 212 of lower part 210 of hold-down device 200 such that second portions 214b of protrusions 214 extend through recesses 322 of sensor units 320, and carrier elements 354 of sensor units 320 rest on first portions 214a of protrusions 214. Thereby, a gap is created between the lower surface of sensor arrangement 300 and the bottom surface of cavity 212, which prevents sensor arrangement 300 from coming in contact with lower part 210 of hold-down device 200 or with a possible fluid accumulation in cavity 212, whereby malfunctions of sensor arrangements 300, like short circuits may be avoided.

For securing sensor arrangement 300 in its position on protrusions 214, respective fixing elements may be provided. In the simplest case, a rubber ring may be attached to second portion 214b of protrusion 214 above sensor arrangement 300, for preventing relative movement between protrusion 214 and sensor arrangement 300. Alternatively, other fixing means may be provided, like an outer screw thread on second portion 214b of protrusion 214 onto which a screw nut may be screwed, for fixing sensor arrangement 300 on protrusion 214.

Between the upper end of protrusion 214 and second portion 230b of throughhole 230, a second sealing element in the form of a sealing ring 242 is arranged for fluid-tightly sealing cavity 212 against throughholes 230.

Fig. 5 is a top view to hold-down device 200, in which upper part 220 has been omitted, such that the interior of hold-down device 200 becomes visible.

As can be seen in Fig. 5, cavity 212 has an at least approximately rectangular shape with a latch-shaped portion 213 extending from its left upper corner. Sealing ring 240 surrounds cavity 212 and latch-shaped portion 213. The size and position of cavity 222 of upper part 220 relative to cavity 212 are indicated in Fig. 5 by a dotted line.

Throughholes 230 are arranged along four parallel lines L1, L2, L3, L4 that are aligned crosswise to conveying direction CD. In each line L1, L2, L3, L4, throughholes 230 are arranged in regular intervals. Throughholes 230 in lines L1, L3 are arranged with an offset of half the distance between two neighbouring throughholes 230 to throughholes 230 in lines L2, L4.

Furthermore, in cavity 212 of lower part 210, a plurality of sensor arrangements 300 is arranged. Each sensor arrangement 300 has one evaluation unit 310 and two sensor units 320, arranged in series with evaluation unit 310 directed in conveying direction CD.

As further can be seen in Fig. 5, sensor arrangements 300 are positioned parallel to each other in cavity 212, and with each second sensor arrangement 300 being arranged with an offset relative to corresponding first sensor arrangement 300 in a direction contrary to conveying direction CD. Accordingly, each first sensor arrangement 300 is positioned such that recesses 322 are coaxially aligned with throughholes 230 in lines L1, L3, and each second sensor arrangement 300 is positioned such that recesses 322 are coaxially aligned with throughholes 230 in lines L2, L4. In this configuration, sensor units 320 of first sensor arrangements 300, that are positioned next to evaluation units 310, are arranged in line L1, and sensor units 320 of second sensor arrangements 300, that are positioned next to evaluation units 310, are arranged in line L2. In accordance therewith, sensor units 320 of first sensor arrangements 300, that are positioned distal from evaluation units 310, are arranged in line L3, and sensor units 320 of second sensor arrangements 300, that are positioned distal from evaluation units 310, are arranged in line L4.

As can be inferred from Figs. 4 and 5, evaluation units 310 of sensor arrangements 300, or at least connection portions 316 of evaluation units 310, are arranged in the space formed by cavity 222 and that portion of cavity 212 being covered by cavity 222. This space accommodates the wires (not shown), by means of which sensor arrangements 300 are interconnected with the control unit of injector apparatus I, and to which said wires are guided via latch-shaped portion 213. Thereby, also said wires are arranged in a sealed region of hold-down device 200.

During processing food products in injector apparatus I, said food products, like pieces of meat are conveyed through injector apparatus I in conveying direction CD by conveyor device C.

According to a first operating mode, a food product to be processed is positioned below injector head 100 that is in a raised position. Then, injector head 100 is lowered. In a first step, hold-down device 200 is moved downwards until it rests on the food product. Thereafter, needle bridge 110 is moved downwards, whereby injector needles 120 extending through hold-down device 200 pierce into the food product about a predefined depth. In this position, the injectate, like brine, is injected into the food product, and, after a defined amount of injectate has been injected, needle bridge 110 is lifted up such that injector needles 120 disengage the food product. Hold-down device 200, which rests on the food product, prevents said food product from being raised by injector needles 120 when being lifted up. Subsequently, hold-down device 200 is raised, and the food product is released and conveyed in conveying direction CD out of injector apparatus I.

A second operating mode may be executed on injector apparatus I. In this operating mode, after the food product to be processed is positioned below injector head 100, hold-down device 200 is moved downwards and stopped immediately before it contacts the food product. Thereafter, the injection process is carried out as described in conjunction with the first operating mode. Accordingly, hold-down device 200 does not contact the food product during the treatment process. The second operating mode is used for processing sensitive food products, for preventing said sensitive products from being damaged, particularly by pressure exerted thereto by hold-down device 200.

During the injection process, injector needles 120 are reversibly moved up and down, through hold-down device 200 and relative thereto. Each of injector needles 120 extends through one of sensor units 320 and is surrounded by an induction coil 324. An injector needle 120 that is usually made of an iron based material, like stainless steel, thereby represents a core for induction coil 324. Each change in the features or the absence of the core or injection needle 120, like by blockage or needle breakage, leads to a corresponding change in the electric and/or magnetic features of induction coil 324 when a current flows therethrough.

Since the injectate usually has a low temperature, injector needle 120, in case of a needle blockage, is not cooled anymore and its temperature raises, whereby also its electromagnetic characteristics change. Accordingly, the change in temperature of injector needle 120 causes a change in the electric or magnetic characteristics of induction coil 324, which may be detected by sensor unit 320.

In the case that an injector needle 120 is broken, its absence causes a respective change in the electric or magnetic characteristics of induction coil 324, which may be detected by sensor unit 320 accordingly.

Dependent on the kind and/or degree of failure, breakage or blockage of injector needle 120, a respective signal is generated in induction coil 324 of sensor unit 320, or an existing signal changes accordingly. This signal is digitalized in A/D-converter 328 and transferred to evaluation unit 310. The digitization of said signal in sensor unit 320 reduces possible effects of disturbance impact to a minimum, and enables a precise monitoring.

Controller circuitry 314 of evaluation unit 310 forwards the digitalized signals of each sensor unit 320 to the control unit of injector apparatus I. In the control unit of injector apparatus I the signals provided by sensor arrangements 300 are analysed for determining the status of injection needles 120, like their presence or the kind and degree of a possible failure. The control unit of injector apparatus I may further output a signal corresponding to a possible failure, and for informing an operator.

As explained in conjunction with Fig. 3, neighbouring sensor units 320 of sensor arrangement 300 are interconnected by flat ribbon cable sections 356 that are fixedly coupled to carrier elements 354 of sensor units 320. The length of flat ribbon cable sections 356 defines the maximum distance between neighbouring sensor units 320. However, due to the flexibility of flat ribbon cable sections 356, the distance between neighbouring sensor units 320 may be reduced, e.g. for adapting sensor arrangements 300 to an injector head 100 with a reduced distance between the rows of injector needles 120.

However, flat ribbon cable sections 356 may also be coupled to carrier element 354 by respective connector means that may include clamps or the like. This enables not only to remove easily sensor units 320 from an existing sensor arrangement 300, but also to connect additional sensor units 320 thereto.

Alternatively, evaluation unit 310 and sensor units 320 may also be arranged on a carrier unit 350 including a single, longitudinally extending printed circuit board. In this configuration, sensor units 320 of sensor arrangement 300 are arranged in a fixed distance to each other.

For further adapting sensor arrangement 300 to a specific injector head 100 having a defined number of injector needles 120, or for enabling a specific arrangement of injector needles 120, the number of sensor units 320 of sensor arrangement 300 may be reduced by cutting flat ribbon cable sections 356, starting with the leftmost sensor unit 320, according to Fig. 3. Evaluation unit 310 is adapted to recognise the number of sensor units 320, and to associate the signals received to the respective sensor units 300.

The design of sensor arrangements 300 allows the control unit of injector apparatus I to separately analyse the signal of each sensor unit 320. Accordingly, it is possible to select specific sensor units 320 for monitoring the respective injector needles 120. This enables an adaption of hold-down device 200, and particularly sensor arrangements 300 therein, to realize specific stitch pattern, e.g. by exchanging needle bridge 110 by one having a reduced number of injector needles 120, to reduce the distance between active sensor units 320 for reducing possible interferences, or for reducing the volume of data to be analysed in order to reduce the evaluation effort.

The digital technique limits the number of sensor units 320 per sensor arrangement 300 to a total of eight. In a configuration of sensor arrangements 300 as shown in Fig. 5, and with sensor arrangements 300 each having eight sensor units 320, it is possible to realize sixteen lines of sensor units 320 such that an injector head 100 may include sixteen rows of injector needles 120. In the case that a higher number of rows of injector needles 120 is required, a second configuration of sensor arrangements 300 may be positioned in hold-down device 200 in a mirror inverted orientation, such that a maximum of thirty-two rows of injector needles 120 may be realized. By cutting off the respective sensor units 320 from sensor arrangements 300, each number of lines of sensor units 320 up to thirty-two may thereby be realized.

The specific design of sensor arrangements 300 and their configuration in hold-down device 200 allows hold-down device 200 to be provided as a spare part for replacing a defective hold-down device, or as a retrofit part for being mounted to an existing injector apparatus to enable a monitoring of its injection needles as described above.

A hold-down device 200 provided as a retrofit part may have a general design that matches all or at least most of the existing injector apparatuses. An adaption to the specific injector apparatus may be done by selecting the specific sensor units necessary for the desired monitoring process.

As explained above, sensor arrangements 300 are accommodated in cavities 212, 222 in lower and upper parts 210, 220 of hold-down device 200, which are fluid-tightly sealed therein by sealing rings 240, 242. For further reducing possible impact of humidity, sensor arrangements 300 may additionally be provided with a fluid tight covering, like an epoxy resin.

The process of monitoring injector needles 120 has been explained as being executed during an injection process in which injector needles 120 are moved relative to hold-down device 200. Alternatively or additionally, a monitoring process may also be executed during the setup process of the injector apparatus. After installing needle bridge 110 and/or hold-down device 200 on injector apparatus I, hold-down device 200 may be vertically reversibly shifted along injector needles 120. During this movement, a monitoring process may be executed for determining whether the installed needle bridge is provided with the correct number and/or size of injector needles, and whether the injector needles are arranged in the required pattern. Thereby possible mismatches may be detected prior to starting the injection process.

For further preventing mismatches between exchangeable parts of the food processing machine, e.g. the processing tool carrier, like needle bridge 110, and a respective hold-down device, said exchangeable parts may be provided with an identification. Said identification may be a label including information regarding specific features of the machine part and additional information regarding the compatibility with other machine parts. The information in said label may be readable by human eye. The label may also be a barcode label or an RFID label. Information included in a barcode or an RFID label may automatically be read out by respective readers. Said readers may be installed in a storage for the exchangeable machine part for scanning the machine parts withdrawn from the storage or put back thereto. Alternatively or additionally, a respective reader may be installed at the food processing machine for scanning a machine part prior to installation or after removal from the food processing machine.

Furthermore, additional information may be stored in a label, particularly in a RFID label. This additional information may include data regarding the maintenance history, operating time or the like.

In conjunction with Figs. 1 to 5, an injector apparatus I including injector needles 120 as the processing tools has been described as the food processing machine. It has to be understood that other kinds of food processing machines which include at least one processing tool, may be equipped with one or more sensor arrangements 300. It is only necessary that said processing tool, at least during the food processing step, is linearly reversibly movable, such that a monitoring process may be executed, using at least one sensor arrangement according to the present invention. A further example for such a food processing machine is a steaker apparatus which includes knives for cutting a piece of meat during a processing step, and in which said knives as the processing tools are linearly reversibly moved towards the piece of meat.

Induction coil 324 of sensor unit 320 has a generally circular shape, in adaption to the circular cross-section of injector needles 120. Accordingly, in adaption to the specific shape or relevant cross-section of a processing tool, an induction coil may have a corresponding shape, like a rectangular, triangular or oval shape.

Sensor arrangement 300 may not only include an inductive sensor, like an induction coil. Additionally to an inductive sensor, further sensors may be provided, like a capacitive sensor or an optical sensor, for executing separate monitoring steps, or for providing combined signals during a monitoring process, e.g. for increasing the monitoring accuracy.

## Claims

1. A sensor arrangement (300) for a food processing machine (I) having at least one processing tool (120) reversibly performing a working movement, the sensor arrangement (300) being provided for monitoring the at least one processing tool (120), the sensor arrangement (300) includes:
at least one evaluation unit (310) and at least one sensor unit (320);
wherein the sensor arrangement (300) is adapted to be connected to at least one further sensor unit (320) such that the at least one evaluation unit (310) and the at least two sensor units (320) are arranged in series.

2. The sensor arrangement (300) according to claim 1,
wherein the at least one evaluation unit (310) and the at least two sensor units (320) are interconnected by preferably severable cables (356), preferably in form of a ribbon cable, preferably at the factory.

3. The sensor arrangement (300) according to claim 1,
wherein the at least one evaluation unit (310) and the at least two sensor units (320) are coupled to each other by connector means, like plug connectors or electrical clamps.

4. The sensor arrangement (300) according to any of claims 1 to 3,
wherein the at least two sensor units (320) may be arranged on the same side of the at least one evaluation unit (310).

5. The sensor arrangement (300) according to any of claims 1 to 3,
wherein the at least two sensor units (320) may be arranged on opposite sides of the at least one evaluation unit (310).

6. The sensor arrangement (300) according to any of claims 1 to 5,
wherein each sensor unit (320) may include at least one of an optical, inductive or capacitive sensor.

7. The sensor arrangement (300) according to claim 6,
wherein each sensor unit (320) includes an inductive sensor with at least one induction coil, preferably in form of a conductor loop (324).

8. The sensor arrangement (300) according to any one of claims 1 to 7,
wherein each sensor unit (320) comprises a recess (322), preferably a hole along which the at least one processing tool (120) to be monitored moves during its working movement.

9. The sensor arrangement (300) according to claim 8 when dependent on claim 7,
wherein the induction coil (324) is arranged around the recess (322).

10. The sensor arrangement (300) according to any of claims 1 to 9,
wherein each sensor unit (320) includes an A/D converter (328).

11. The sensor arrangement (300) according to any of claims 1 to 10,
wherein the at least one evaluation unit (310) and each sensor unit (320) are arranged on a carrier unit (350).

12. The sensor arrangement (300) according to claim 11,
wherein the carrier unit (350) is formed by a printed circuit board (352, 354).

13. The sensor arrangement (300) according to claim 11 or 12,
wherein the carrier unit (350) is formed at least partially by a ribbon cable (356).

14. A food processing machine (I) comprising at least one processing tool (120) reversibly performing a working movement, a hold-down device (200) for holding down a food product to be processed, and at least one sensor arrangement (300) according to any of claims 1 to 13, which is associated with the hold-down device (200).

15. A hold-down device (200) for holding down a food product to be processed in a food processing machine (I), including at least one sensor arrangement (300) according to any of claims 1 to 13 which is associated with the hold-down device (200).
